# FASCICULE DE BREVET EUROPEEN

(11) **EP 4 526 635 B1**
(45) Date de publication et mention de la délivrance du brevet: **08.04.2026**
(21) Numéro de dépôt: 23727971.6
(22) Date de dépôt: 17.05.2023
(51) Int. Cl.: G01K 1/143, G01K 13/00, G01N 17/00

(54) **CAPTEUR DE BIOCOLONISATION**
BIOKOLONIESENSOR
BIOCOLONIZATION SENSOR

(30) Priorité: 18.05.2022 FR 2204752
(43) Date de publication de la demande: 26.03.2025
(73) Titulaire: Nantes Université, 44035 Nantes Cedex 1 (FR); CNRS, 75016 Paris (FR)
(72) Inventeur: SCHOEFS, Franck, 44240 Sucé sur Erdre (FR); GARNIER, Bertrand, 44300 Nantes (FR); MAKSASSI, Ziad, 44200 Nantes (FR); GUELED, Ahmed, 44810 La Chevallerais (FR)
(74) Mandataire: Vidon Brevets & Stratégie
(86) Numéro de dépôt international: PCT/EP2023/063245
(87) Numéro de publication internationale: WO 2023/222758

(56) Documents cités:
- CN-A- 103 453 869
- US-B2- 9 011 608

## Description

### Domaine technique

La divulgation se rapporte à la mesure de biocolonisation. La divulgation se rapporte plus particulièrement à la mesure de la biocolonisation en environnement marin. La divulgation se rapporte encore plus spécifiquement à un dispositif de mesure de biocolonisation en milieu marin.

### Art Antérieur

Les projets d'éoliennes flottantes se développent à l'échelle mondiale de manière prometteuse. Un de leurs composants clés est le câble dynamique de puissance permettant le raccordement des éoliennes à leur sous station électrique et au réseau énergétique sous-marin. Ce câble de transmission de la puissance électrique obtenu à partir de l'éolienne est un composant clé du système électrique. Son fonctionnement doit donc être soigneusement monitoré. Il est intellectuellement facile de penser que ce câble ne présente pas de difficulté de fonctionnement car il repose sur le fond marin et ne subit finalement peu de contraintes par rapport à l'éolienne elle-même. Or cette idée doit être battue en brèche : ce câble subit lui aussi les effets du temps, notamment du fait d'un effet peu connu mais plus impactant qu'est la biocolonisation. On entend par biocolonisation le développement de concrétions marines (algues, moules, huîtres) qui peuvent atteindre plusieurs dizaines de centimètres d'épaisseur. Cette biocolonisation se déroule paradoxalement sous l'effet du fonctionnement du câble : le passage d'une quantité importante d'électricité dans le câble entraine un échauffement de celui-ci. Cet échauffement du câble provoque un échauffement local de l'eau de mer se trouvant au contact du câble. Cet échauffement favorise lui-même la biocolonisation en rendant le milieu proche du câble plus favorable à la formation de concrétions. Or, de manière traditionnelle, les paramètres de fabrication du câble de puissance incluent la capacité du câble à se refroidir grâce au milieu (i.e. grâce à l'eau de mer qui l'entoure). La biocolonisation entraîne donc une variation, in situ, des paramètres initiaux pris en compte lors de la fabrication du câble de puissance. En d'autres termes, le transport d'électricité peut augmenter la température de l'eau aux alentours du câble ce qui entraîne une biocolonisation plus importante du câble.

De plus, par l'effet d'écran thermique, de masse additionnelle et de modification de la rugosité, la biocolonisation va impacter le comportement du câble dynamique. Parmi les effets majeurs découlant de la biocolonisation, on note notamment les sollicitations hydrodynamiques modifiant la tenue en situation de tempête ou de fatigue ; mais également les effets thermiques autour du câble. Compte tenu de la variété des éléments du câble (modules de flottabilité, raidisseurs) et de la variété des environnements biologiques, la modélisation de ce phénomène reste un challenge. Il est donc nécessaire de comprendre le rôle de la biocolonisation, dans sa variabilité, pour concentrer des études sur des composants particuliers.

Il est ainsi nécessaire non seulement d'adresser l'effet de la biocolonisation des ombilicaux dynamiques sur les échanges thermiques, mais également de disposer de moyens de mesurer, en temps réel ou en temps différé, l'étendue de la biocolonisation elle-même. Il est également nécessaire de mesurer cette biocolonisation afin notamment d'évaluer le besoin de maintenance ou de remplacement des câbles. Dans l'état de la technique, le CN103453869B décrit un dispositif de mesure de température qui peut être apposé sur un composant immergé, dans D2 un pilier d'un pont, pour évaluer la biocolonisation sur ce composant. Le dispositif de D2 comprend un élément chauffant et des capteurs de température.

### Résumé

La divulgation a été conçu en conservant ces inconvénients de l'art antérieur à l'esprit. La divulgation se rapporte plus particulièrement à un dispositif pour la mesure indirecte de la biocolonisation. Plus particulièrement, la divulgation se rapporte à un dispositif de mesure de température configuré pour être apposé sur un composant immergé pour évaluer la biocolonisation. Un tel dispositif de mesure de température comprend :
- un élément chauffant piloté par un circuit de chauffe ;
- au moins un module de captation de température, piloté par un module de mesure de température, le module de captation étant destiné à capter la température à proximité du module de chauffage, durant une période prédéterminée ;
- au moins un module de mémorisation des températures obtenues par le module de mesure de température ;
- un module de transmission des données mémorisées dans le module de mémorisation.

Un tel dispositif comprend également une partie P1 comprenant, d'une part, des moyens d'alimentation du dispositif de mesure de température, et d'autre part, un module comprenant notamment le circuit de chauffe, le module de mesure de température, le module de mémorisation, et le module de transmission. Cette partie est distincte d'une partie P2 dite de chauffe et de mesure, et au moins une portion de la partie P1 comprend un traitement limitant la biocolonisation.

Ainsi, il est possible de recueillir des températures à proximité de l'élément chauffant intégré au dispositif, pendant une période de temps prédéterminée, pendant et après une durée pendant laquelle l'élément chauffant est actif et chauffé. Une telle configuration du dispositif, comprenant les deux parties P1 et P2, permet une adaptation optimale de celui-ci au câble sur lequel il est installé, ce qui permet d'une part une mesure optimale des données de température, et d'autre part le traitement optimal de ces données mesurées/recueillies. Également, le traitement appliqué sur la partie P1 et limitant la biocolonisation permet avantageusement de repérer plus facilement le dispositif lorsque celui est immergé et collé/fixé à un câble. Il est également plus simple d'en assurer la maintenance sous-marine. Le dispositif peut comprendre une source d'alimentation autonome, comme par exemple un ensemble de batteries ou accumulateurs pour alimenter le chauffage et les modules électroniques destinés au pilotage et à la mesure de température en fonction du temps, le maintien en mode veilleuse du dispositif.

Selon une caractéristique particulière, la partie P2 dite de chauffe et de mesure, de forme globalement hémicylindrique, comporte une pluralité de couches comprenant:
- Une couche de support, en contact avec la surface externe du composant immergé ;
- Une couche d'isolation, permettant d'isoler la couche support ;
- Une couche de chauffe, comprenant ledit au moins un élément chauffant ;
- Une couche métallique, dite d'accumulation pour accumuler la chaleur produite par la couche de chauffe.

Une telle configuration permet de maitriser les conditions de chauffe et de mesure de température au cours du temps.

Selon une caractéristique particulière, le dispositif comprend au moins deux modules de captation de température et au moins un premier un module de captation de température est inséré au sein de la couche d'accumulation et au moins un deuxième un module de captation de température est inséré au sein de la couche d'isolation.

Selon une caractéristique particulière, le module de transmission des données comprend un composant de transmission acoustique.

Selon un autre aspect, l'invention se rapporte également à système d'obtention de données représentative d'une biocolonisation d'un composant immergé en pleine mer, système caractérisé en ce qu'il comprend au moins un dispositif de mesure de température tel que décrit dans la présente et au moins un dispositif de traitement de données de réponse en température transmises par ledit au moins un dispositif de mesure de température, ledit dispositif de traitement étant apte à caractériser la biocolonisation du composant immergé en fonction des données de réponse en température.

Les données de réponse en température peuvent être des données horodatées de température des modules de captation de température qui sont stockées en mémoire. Elles sont fonction du temps et obtenue sur une courte durée (typiquement inférieure à *15 minutes*)*.*

Selon un autre aspect, l'invention se rapporte également à un procédé d'obtention de données représentative d'une biocolonisation d'un composant immergé. Un tel procédé est mis en œuvre par un système tel que décrit dans la présente et un tel procédé comprend les étapes suivantes :
- une étape de chauffe, pendant une période prédéterminée, dudit élément chauffant dudit au moins un dispositif de mesure de température ;
- une pluralités d'étapes de mesure de température résultant de l'étape de chauffe ;
- étape de stockage des données mesurées, notamment comprenant l'horodatage de ces données ; et ultérieurement,
- une étape de transmission des données stockées, s'accompagnant ensuite par une étape de caractérisation de la biocolonisation à l'aide des données de température transmises.

Selon une caractéristique particulière, l'étape de caractérisation de la biocolonisation à l'aide des données de température transmises comprend le calcul d'un coefficient de transfert de chaleur h de la faune et de la flore sous-marine constituant la biocolonisation, à l'aide d'un modèle thermique analytique 1D ou d'un modèle thermique conductif résolu par la méthode des quadripôles.

Selon une implémentation préférée, les différentes étapes des procédés selon la présente divulgation sont mises en œuvre par un ou plusieurs logiciels ou programmes d'ordinateur, comprenant des instructions logicielles destinées à être exécutées par un processeur de données d'un terminal d'exécution selon la présente technique et étant conçu pour commander l'exécution des différentes étapes des procédés, mis en œuvre au niveau d'un terminal de communication, d'un serveur distant et/ou d'une chaîne de blocs, dans le cadre d'une répartition des traitements à effectuer et déterminés par un code source scripté ou un code compilé.

En conséquence, la présente technique vise aussi des programmes, susceptibles d'être exécutés par un ordinateur ou par un processeur de données, ces programmes comportant des instructions pour commander l'exécution des étapes des procédés tel que mentionnés ci-dessus.

Un programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

La présente technique vise aussi un support d'informations lisible par un processeur de données, et comportant des instructions d'un programme tel que mentionné ci-dessus.

Le support d'informations peut être n'importe quelle entité ou terminal capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un support mobile (carte mémoire) ou un disque dur ou un SSD.

D'autre part, le support d'informations peut être un support transmissible tel qu'un signal électrique ou optique, qui peut être acheminé via un câble électrique ou optique, par radio ou par d'autres moyens. Le programme selon la présente technique peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, la présente technique est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel est exécuté par un processeur de données d'une entité physique (terminal, serveur, passerelle, set-top-box, routeur, etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

Chaque composante du système précédemment décrit met bien entendu en œuvre ses propres modules logiciels.

Les différents modes de réalisation mentionnés ci-dessus sont combinables entre eux pour la mise en œuvre de la présente technique.

### Brève description des dessins

D'autres buts, caractéristiques et avantages de la divulgation apparaîtront plus clairement à la lecture de la description suivante, donnée à titre de simple exemple illustratif, et non limitatif, en relation avec les figures, parmi lesquelles :
- [fig. 1] représente une coupe d'une partie du dispositif de mesure de température ;
- [fig. 2] illustre les différents modules du dispositif de mesure de température ;
- [fig. 3] est une coupe illustrant une configuration hémicylindrique d'une portion du dispositif de mesure de température sur un élément immergé ;
- [fig. 4] illustre schématiquement le procédé de mesure et de traitement mis en œuvre ;
- [fig. 5] représente une exemple de réalisation du dispositif de mesure de température ;
- [fig. 6] est une vue de coupe de la deuxième partie du dispositif de mesure de température exemplifié en figure 5.
- [fig. 7] illustre schématiquement la structure programmatique du dispositif de mesure de température.

### Description détaillée

De mêmes éléments ont été désignés par de mêmes références dans les différentes figures. En particulier, les éléments structurels et/ou fonctionnels communs aux différents exemples de réalisation peuvent présenter les mêmes références et peuvent disposer de propriétés structurelles, dimensionnelles et matérielles identiques. Par souci de clarté, seuls les étapes et éléments utiles à la compréhension des exemples de réalisation décrits ont été représentés et sont détaillés. En particulier, des circuits de génération d'un signal et de commande de fréquence ou d'intensité de ce signal, ainsi que des circuits de commande et de réception de valeurs fournies par des capteurs, ne sont pas décrits en détail, les exemples de réalisation décrits étant compatibles avec de tels circuits usuels. Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments. Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures. Sauf précision contraire, les expressions "environ", "approximativement", "sensiblement", et "de l'ordre de" signifient à 20 % près, de préférence à 5 % près.

Comme exposé précédemment, les échanges thermiques autour des câbles sous-marins, notamment des câbles électriques, sont plus ou moins fortement altérés par la biocolonisation (le développement de concrétions marines telles que algues, moules, huitres...) avec par conséquent, des niveaux de température plus élevés induisant à terme une durée de vie moindre des câbles. Le suivi en temps réel ou semi réel de la croissance de la biocolonisation avec ses effets sur les échanges thermiques est donc important pour la maintenance notamment des éoliennes offshores.

Ainsi, la divulgation vise à évaluer la progression de la biocolonisation des câbles et des pipelines reposant sur les fonds marins. La divulgation présente notamment un intérêt pour évaluer le besoin de nettoyage ou de remplacement de tels câbles ou pipelines. La divulgation comprend deux éléments indépendants mais offrant une certaine complémentarité. Selon un premier aspect, il est divulgué un dispositif apte à permettre une mesure de la biocolonisation des câbles sous-marins (un tel dispositif, également appelé capteur par simplicité, comprenant par exemple un module de chauffage impulsionnel ou modulé associé à un capteur de température subsurfacique, qui fonctionne en régime instationnaire et qui est configuré pour être apposé sur un composant immergé). Selon un deuxième aspect, il est divulgué une méthode de mesure de la biocolonisation utilisant les données fournies par le dispositif de mesure de la biocolonisation. Cette méthode est basée sur un principe de mesure indirecte de la biocolonisation. Plus particulièrement, dans ce deuxième aspect, la divulgation consiste à mesurer l'influence de la biocolonisation sur les échanges thermiques d'un composant immergé (un câble, par exemple, mais également un pipeline ou d'autres éléments immergés soumis à biocolonisation).

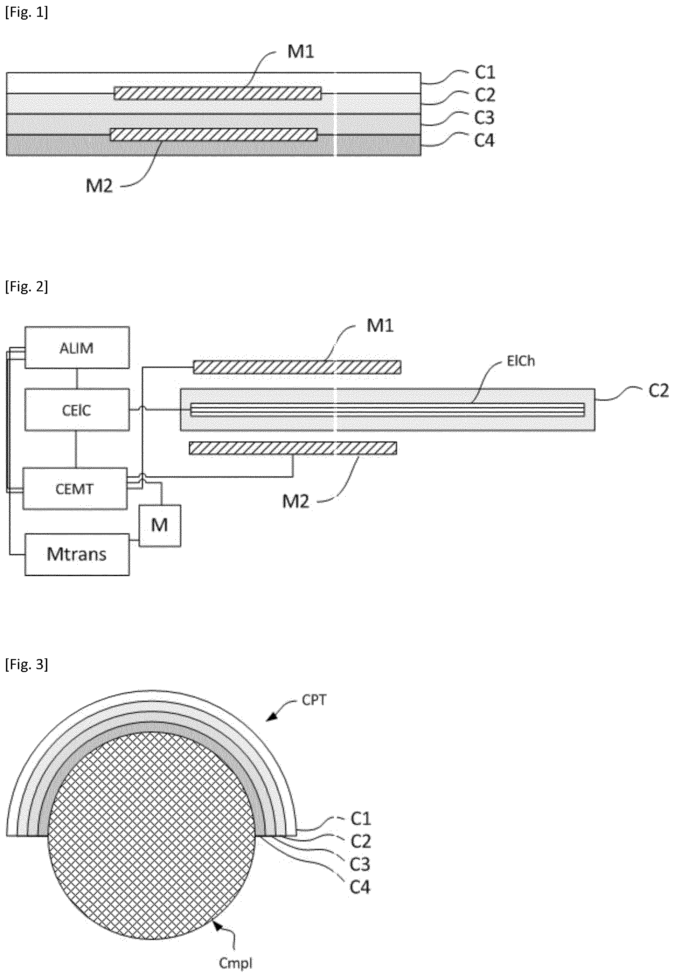

La divulgation comprend ainsi un capteur à intégrer ou à poser sur un composant immergé, ledit capteur étant en mesure de fournir des données relatives à une réponse en température. Les figures1 à 3 présentent les principes généraux du capteur objet de la divulgation. Un tel capteur comprend une combinaison de plusieurs couches de matériaux, comprise dans une partie du dispositif (P2) : une couche supérieure (C1) (par exemple en acier inoxydable) dont la face supérieure est en contact avec le milieu (l'eau par exemple), une couche (C2), située sous la couche supérieure, comprenant un ou plusieurs éléments chauffants, une couche (C3) thermoplastique (par exemple Polyéthylène) située sous la couche comprenant les éléments chauffants, une couche inférieure (C4), dite de contact, par exemple constituée de caoutchouc, dont la face inférieure est en contact avec l'élément à surveiller (le câble, le pipeline, etc.). Cette combinaison de couches intègre également aux moins deux composants de mesure de température (M1, M2) (par exemple des thermocouples) situées entre la couche C1 et la couche C2 d'une part et entre la couche C3 et la couche C4 d'autre part. Plus particulièrement, le capteur objet de la divulgation se présente sous la forme d'un ensemble, comprenant en son sein une couche de chauffe (C2) comprenant au moins un élément chauffant en feuille (ElCh), comprenant des moyens de connexion à un circuit de chauffe (CEIC), lequel délivre, comme explicité ci-après, par l'intermédiaire des moyens de connexion, une impulsion électrique, d'une durée et d'une intensité prédéterminée. Tel que présenté en figure 3, la forme du capteur est adaptée pour qu'elle épouse la configuration du composant immergé : en figure 3, qui est une vue schématique de coupe, le capteur (CPT) est posé sur un composant immergé (Cmpl) de forme cylindrique et le fond du capteur (représenté par la couche C4) possède ainsi une forme concave épousant la forme cylindrique du composant immergé. Bien entendu, la forme du capteur est en tout état de cause adaptée à la forme du composant immergé (Cmpl). Le circuit de chauffe (CEIC), quant à lui, est connecté à un moyen d'alimentation (ALIM). Dans l'exemple présenté, le moyen d'alimentation se présente sous la forme d'une batterie, intégrée au capteur. Une telle implémentation est envisageable en fonction de la sollicitation envisagée du capteur. En effet, en condition opérationnelle, le processus de biocolonisation étant lent, la sollicitation du capteur est peu fréquente (quatre à six fois par an). Dès lors, les besoins énergétiques de ce capteur sont réduits et il n'est pas nécessaire de disposer d'une alimentation continue de celui-ci. Dans d'autres conditions opérationnelles, le moyen d'alimentation comprend un câble d'alimentation, par exemple tiré depuis la surface : dans le cas d'une éolienne en surface, le câble d'alimentation peut par exemple être tiré depuis l'éolienne et l'alimentation du capteur est assurée indirectement par cette dernière. Enfin, des moyens d'alimentation mixtes sont également envisageables, combinant l'utilisation d'une batterie et de moyens de rechargement de cette batterie, ces moyens se présentant par exemple sous la forme d'un câble, comme cela vient d'être exposé ou sous toute autre forme adaptée au milieu marin dans lequel se trouve le capteur (mini hydrolienne par exemple).

Quoi qu'il en soit, le capteur comprend en outre, dans cet exemple, un circuit électronique de mesure de température (CEMT). Ce circuit électronique de mesure de température est activé au début de la phase de chauffe de l'élément chauffant. Il est en mesure de déterminer, au cours du temps, les variations de température, en partant d'une température initiale (avant la chauffe), jusqu'à une température finale (qui est la température initiale, comme expliqué par la suite). Ce circuit électronique de mesure de température (CEMT) transmet, à intervalle prédéfini, les températures mesurées au cours du temps à un dispositif électronique d'analyse et de stockage (non représenté sur les figures), qui sont mémorisées dans une mémoire M. La transmission est effectuée par un module de transmission (MTrans). L'ensemble de ces modules peuvent être intégrés au sein d'un seul et même composant électronique, fabriqué à façon. Ces modules peuvent être pilotés par un microprocesseur ou un microcontrôleur (non représenté). Cette transmission peut être une transmission sans fil (par exemple par un procédé de transmission acoustique), par exemple à une station de réception de ces informations, ou bien être réalisée, comme pour l'alimentation, à l'aide d'un câble jusqu'à une station de réception adéquate de ces informations. Le moyen d'alimentation, le circuit de chauffe (CEIC), le module de mesure de température (CEMT), la mémoire M et le module de transmission (MTrans) sont compris dans une partie du dispositif, appelée P1, distincte de la partie P2.

Une fois en possession des températures mesurées au cours du temps, éventuellement durant et après la phase de chauffe, le dispositif électronique d'analyse et de stockage est en mesure de caractériser la biocolonisation du composant immergé. Une telle configuration permet ainsi de recueillir des températures à proximité de l'élément chauffant intégré au capteur, pendant une période de temps prédéterminée, pendant et après une durée pendant laquelle l'élément chauffant est actif et chauffe. Une courbe de croissance et de décroissance de température mesurée peut donc être obtenue (une courbe par module de captation de température par exemple). À partir de ces données, il est ensuite possible de caractériser la biocolonisation (constitution, épaisseur).

Cette caractérisation comprend par exemple deux volets : le premier volet consiste à déterminer une épaisseur des concrétions situées aux abords du capteurs (i.e. des concrétions qui se sont formées sur le capteur lui-même et aux alentours immédiats de celui-ci). Ainsi, la phase de refroidissement juste après la fin du chauffage est exploitée pour en déduire le coefficient global d'échange à l'aide par exemple d'un modèle thermique conductif développé à l'aide de la méthode des quadrupôles. Ce modèle thermique analytique 1D permet de prédire les températures et flux de chaleur dans le dispositif expérimental multicouches avec une condition à la frontière en surface de type Fourier donc avec un coefficient d'échange thermique. À partir de la connaissance de l'évolution de la température mesurée en fonction du temps suite à un chauffage de type impulsion, une méthode d'identifications de paramètre est appliquée minimisant les écarts entre les températures mesurées et celles calculées par le modèle thermique développé afin d'estimer le coefficient d'échange. Le coefficient d'échange caractérise alors les échanges thermiques autour du capteur. On effectue, en d'autres termes, une évaluation de la résistance thermique globale liée à l'épaisseur et le type de biocolonisation. Des essais effectués sur la base du capteur exemplifié précédemment ont ainsi montré qu'avec un capteur thermique immergé, la présence d'une couche de moules de trois à quatre centimètres réduisait le coefficient d'échange d'un facteur deux, ce qui démontre la grande sensibilité de la technique de mesure à la présence de biocolonisation selon la divulgation. On note de plus qu'un coefficient d'échange réduit d'un facteur deux a un impact important sur le niveau de température de fonctionnement d'un câble électrique sous-marin par exemple.

En fonction des modes de réalisation et des conditions de mise en œuvre opérationnelles, le dispositif de la divulgation comprend, en plus des modules et moyens précédemment énoncés, des moyens d'obtention de données représentatives d'une direction et/ou d'une vitesse d'écoulement d'eau autour du dispositif de mesure de température. De tels moyens peuvent se présenter sous la forme d'un courantomètre à effet doppler ou encore d'un moulinet à hélice par exemple. Ces moyens peuvent être intégrés au dispositif de mesure de température ou bien être associés au dispositif de mesure de température en fonction des modes de réalisation. Les données obtenues par l'intermédiaire de ces moyens sont également stockées dans le composant mémoire. Ces données sont ensuite transmises, en même temps que les données d'évolution de température.

Le deuxième volet de caractérisation des concrétions consiste en l'identification des espèces colonisatrices formant cette concrétion. Sur la base d'une base de données, les courbes de décroissance des températures sont associées à une ou plusieurs espèces colonisatrices. Plus particulièrement, une application permet de relier les courbes d'échanges de température à une épaisseur de biocolonisation et à une espèce donnée à partir de la base de données. Cette base de données comprend par exemple les dix espèces de colonisateurs les plus courantes (moules, huitres, algues). La reconnaissance effective de l'espèce colonisatrice peut préalablement ou subséquemment être déterminée ou confirmée lors d'une plongée usuelle de surveillance par exemple, et être utilisée pour augmenter le volume de connaissance de la base de données de caractérisation.

La divulgation, d'autre part peut également faire appel à une brique logicielle pour caractériser la biocolonisation, à partir de la réponse en température effectivement mesurée.

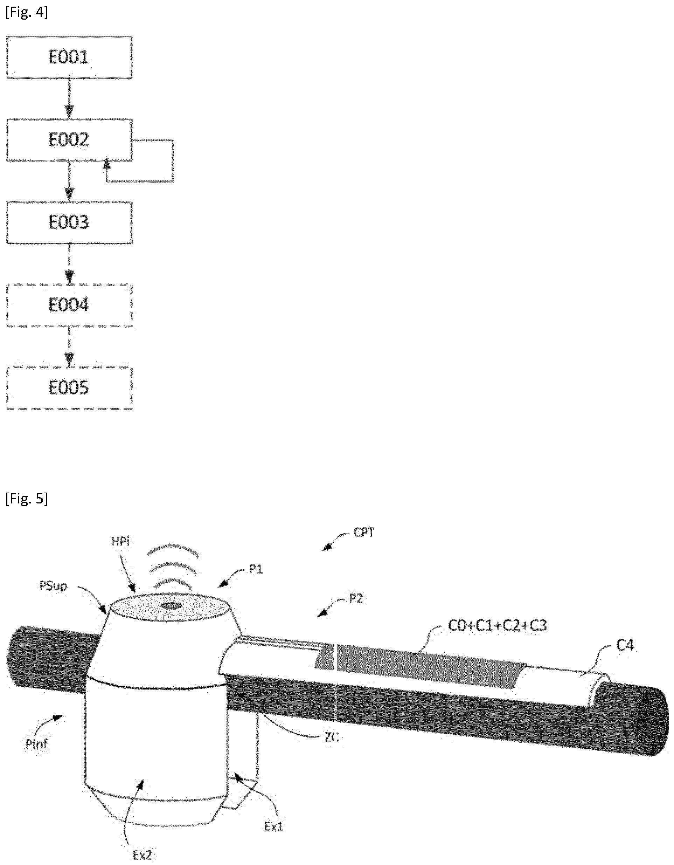

Le principe général de fonctionnement du procédé de mesure mis en œuvre à partir d'un tel capteur est décrit en relation avec la figure 4 et il comprend :
- une étape de chauffe (E001), pendant une période prédéterminée : une impulsion électrique est appliquée à l'élément chauffant de la couche C2; ceci a pour effet de chauffer cette portion ; la couche métallique se trouvant au-dessus de l'élément chauffant conduit (et répartit) la chaleur produite sur l'ensemble de sa surface.
- une pluralité d'étapes de mesures (E002) de température, notamment à l'issue de l'arrêt de la chauffe, par exemple par l'intermédiaire des capteurs de température M1 et M2 ;
- une étape de stockage (E003) des données mesurées, notamment comprenant l'horodatage de ces données ; et ultérieurement,
- une étape de transmission (E004) des données stockées (notamment des données de température à un dispositif électronique d'analyse) ; et
- une étape de caractérisation (E005) de la biocolonisation à l'aide des données de température transmises.

Le travail de caractérisation réalisé par le dispositif électronique d'analyse peut se baser sur un apprentissage effectué préalablement (i.e. sur la base d'un ensemble de données de caractérisation permettant de déduire une présence / une quantité / une typologie de biocolonisation à partir d'une ou de plusieurs courbes de températures données). Plus particulièrement, à partir de l'évolution des températures mesurées, un coefficient de transfert de chaleur h de la faune et de la flore sous-marine constituant la biocolonisation est calculé à l'aide d'un modèle thermique analytique 1D ou d'un modèle thermique conductif résolu par la méthode des quadripôles. L'avantage de disposer d'au moins deux capteurs (M1, M2), positionnés à des endroits différents du capteur est qu'ils peuvent chacun mesurer des températures (et des évolutions de températures) différents. Par voie de conséquence, la résolution du problème de caractérisation de la biocolonisation peut utiliser ces différentes sources d'évolution des températures pour affiner les calculs.

La mise en œuvre du capteur de température selon la présente divulgation comprend par exemple, une étape de positionnement d'un dispositif de commande du capteur à la verticale de celui-ci (ce dispositif peut être intégré au sein d'une embarcation en surface par exemple) ; une étape de transmission, par le dispositif de commande, d'une commande acoustique (sonore ou ultrasonore) de mise en œuvre d'une transmission de données (E004), celles-ci ayant été obtenues lors de cycles de mesures antérieures éventuellement périodiquement (étapes E001 à E003). À l'issue de la transmission, l'étape de caractérisation (E005) est effectuée soit directement sur l'embarcation (en fonction des équipements disponibles), soit ultérieurement. Une campagne de nettoyage du câble peut alors être envisagée en fonction de la caractérisation de la biocolonisation.

Comme précisé précédemment, en fonction des modes de réalisation et des conditions de mise en œuvre opérationnelles, les données relatives à la vitesse d'écoulement d'eau et de direction de cet écoulement peuvent également être transmises pour affiner la caractérisation de la biocolonisation. Par exemple, de telles données peuvent être utiles, en fonction notamment de la localisation géographique du dispositif de mesure de température, cette localisation géographique impliquant potentiellement la présence de faune ou de flore sous-marine constituant un milieu poreux à pores ouverts donc plus ou moins traversé par le flux d'eau, qu'il est donc possible de caractériser plus finement par l'utilisation de données provenant d'un courantomètre.

Diverses caractéristiques complémentaires de la divulgation peuvent être envisagées. Il est ainsi permis de réaliser un collage du capteur sur le composant immergé (plutôt qu'un bridage), une autonomie en énergie sachant que l'impulsion (le chauffage) est peu fréquente. L'interrogation et l'alimentation peuvent comme exposé précédemment être filaires le long du câble.

La divulgation trouve au minimum deux autres terrains d'application : les plateformes flottantes offshore d'exploitation d'hydrocarbures avec le suivi des risers qui acheminent le pétrole à des températures significatives (150°) et pour lesquelles le sujet de la fatigue en présence de biocolonisation peut se poser de 20 à 50 m de profondeur selon les sites. Des coupons instrumentés en amont de l'installation sur des sites d'éoliennes flottantes. Ces derniers sont constitués d'un multicouche comportant successivement une couche isolante un élément chauffant une pièce métallique équipée d'un thermocouple.

On décrit, en relation avec la figure 5, un exemple de réalisation du capteur schématiquement présenté en relation avec les figures 1, 2 et 3. Dans cet exemple de réalisation, le capteur est autonome et fonctionne en utilisant une source d'alimentation par batterie ou accumulateurs. Comme introduit précédemmet, il se présente en deux parties (P1, P2), la première partie (P1) de forme globalement cylindrique et présentant une zone centrale (ZC) vide, divisant la partie inférieure (Plnf) du capteur en deux excroissance pendante (Ex1, Ex2), chacune de ces excroissances comprenant des composants présentant une certaine masse (des batteries ou accumulateurs par exemple). Ces deux excroissances lestées permettent d'assurer une certaine stabilité du capteur lors de sa pose notamment, mais également en position stationnaire, une fois qu'il est posé. La partie supérieure (PSup) du capteur comprend est celle qui surplombe le câble ou l'élément immergé sous contrôle. Au sein de cette partie supérieure on retrouve notamment le circuit de chauffe (CEIC), le circuit électronique de mesure de température (CEMT) et le circuit de transmission sans fil qui dans le cas présent est un circuit de transmission acoustique relié à un dispositif de transmission acoustique (HPI). Dans cet exemple de réalisation, le capteur est donc autonome et la transmission des données de mesure de température est effectuée, périodiquement par voie acoustique. Le dispositif de transmission acoustique (HPI) est situé en haut du capteur et est orienté vers la surface du plan d'eau au sein duquel le capteur est immergé. Une telle orientation permet d'une part d'émettre directement vers la surface et permet de faciliter les opérations de recueil des données transmises. Dans cet exemple de réalisation, est important que le dispositif de transmission acoustique (HPI) reste vierge de toute biocolonisation. À cette fin, et a minima, la surface supérieure dispositif de transmission acoustique (HPI), qui est en contact avec le milieu aqueux, est traitée pour empêcher ou limiter la biocolonisation. Un tel traitement peut être réalisé en rendant la surface supérieure hydrophobe ou encore en utilisant une peinture ou un revêtement adapté. Dans certains exemples de réalisation, la totalité de la surface extérieure de la première partie (P1) est traitée pour prévenir la biocolonisation : il est de cette façon plus simple de repérer le capteur lorsqu'il est immergé et collé/fixé au câble et il est également plus simple d'en assurer la maintenance sous-marine.

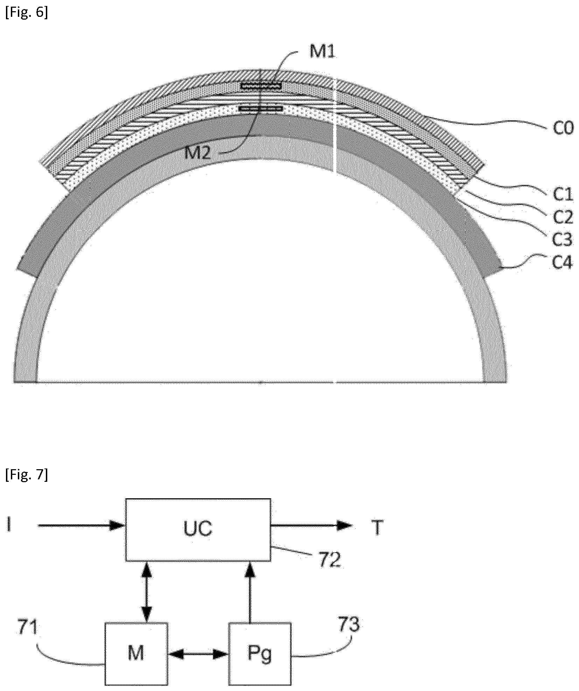

La deuxième partie du capteur (P2) se présente comme une excroissance longitudinale prenant naissance dans la première partie et se prolongeant le long de l'axe de l'élément immergé : cette excroissance est destinée à être biocolonisée. Elle a une forme sensiblement hémicylindrique adaptée à la forme de l'élément immergé sur lequel elle s'adapte. Le rayon de courbure interne de la deuxième partie est donc adapté au rayon de courbure externe de l'élément immergé (le câble), pour lequel on cherche à mesurer l'étendue de la biocolonisation. Cette deuxième partie est globalement constituée des différentes couches et éléments décrits en figure 1, 2 et 3, à l'exception de l'alimentation et des circuits électroniques, qui sont insérés dans la première partie (P1), comme cela a été exposé précédemment. Plus particulièrement, en relation avec la figure 6, dans un exemple de réalisation tenant compte des conditions opérationnelles, la deuxième partie est constituée des couches suivantes : un support en polymère (entrant en contact avec la surface externe de l'élément immergé) faisant office de couche C4, une première couche d'isolant (C3), une couche chauffante (C2), une couche d'acier (C1), et une couche de polymère (C0) de même nature que la paroi externe des câbles électriques sous-marins et l'ensemble du capteur du milieu externe. L'épaisseur de ces couches est, dans cet exemple de réalisation, de l'ordre de : 1 à 5 mm pour C4, 1 à 5 mm pour C3, 0.2 à 1 mm pour C2, 1 à 3 mm pour C1 avec de préférence les valeurs suivantes : 1 pour C4, 1.9 mm pour C3, 0.3 mm pour C2, 1.6 mm pour C1. La couche de même nature que le câble électrique afin d'avoir les mêmes conditions d'accroche de biocolonisation que sur les câbles sous-marins.

Dans un exemple de réalisation, non représenté, le dispositif de mesure de la divulgation comprend une troisième partie, s'étendant longitudinalement le long du dispositif, à l'opposé de la deuxième partie. Cette troisième partie est globalement symétrique de la deuxième. Cette troisième partie peut être considérée comme étant un deuxième bras de mesure. Ce deuxième bras situé de l'autre côté du boitier électronique (constituant la première partie et contenant la batterie ou accumulateurs) est recouvert d'un revêtement anti-biocolonisation. Dans cette configuration la mesure de température effectuée lors et après l'impulsion de chauffage est directement liée à la vitesse du courant marin. Dans ce mode de réalisation, avec les deux bras de mesure (l'un étant bio-colonisé et l'autre étant vierge de toute biocolonisation), un dispositif de mesure "différentiel" est obtenu. Ainsi, dans ce mode de réalisation (et dans tous les modes de réalisation qui mettraient en œuvre une variation de ce principe), le dispositif de mesure permet également de mesurer indirectement la vitesse du courant marin (facteur à prendre en compte) en ajoutant un deuxième bras (ou élément) de mesure (recouvert d'un traitement anti-biocolonisation) afin de disposer d'une information sur l'effet de l'écoulement du courant marin sur le transfert thermique autour de l'élément immergé, c'est à dire permettant la mesure indirecte de la vitesse du courant marin. L'autre bras (partie P2) recouvert de biocolonisation apporte l'information sur l'effet du biocolonisation ajouté à l'effet du courant marin. L'ensemble des deux bras constitue un dispositif "différentiel" permettant d'isoler l'effet de la seule biocolonisation et donc de la caractériser plus finement et donc sans biais (plus ou moins important) lié à l'effet du courant marin.

À l'aide d'un dispositif tel que celui décrit dans les figures précédentes, un procédé de mesure est mis en œuvre, tel que décrit en relation avec la figure 4.

Dans un exemple de réalisation en condition opérationnelle, les caractéristiques suivantes peuvent être prises en considération. Elles ont chacune, en combinaison ou individuellement, la particularité de permettre une obtention optimisée des données de biocolonisation des éléments immergés (notamment les câbles de transmission électrique des éoliennes offshores). Les caractéristiques sont les suivantes :
- Durée de chauffage 15s à 10-15 min ;
- Durée d'enregistrement de la phase de refroidissement : 5 à 10 fois la durée de chauffage ;
- Un ou deux capteurs de température constitués soit d'un thermocouple soit d'un Pt 100 (en fonction de l'électronique embarquée) ;
- Puissance de chauffage de 5 à 100W, en fonction d'une éventuelle caractérisation visuelle préalable d'une biocolonisation précédente dans la zone de pose du capteur, par exemple.
- Les commandes sont transmises par voie acoustique au capteur, tout comme les relevés de températures, qui sont également transmis par voie acoustique du capteur vers le récepteur. Ces relevés comprennent des relevés de température et des relevés de tension électrique d'alimentation le tout en fonction du temps Ces relevés sont mis en œuvre à partir de la surface, à la verticale du dispositif à partir d'un navire, à une périodicité prédéterminée (par exemple chaque trimestre, semestre ou plus selon le type de biocolonisation).

On présente, en relation avec la figure 7, une architecture électronique simplifiée d'un capteur de biocolonisation apte à mettre en œuvre la méthode de mesure telle que présentée précédemment. Un tel capteur de biocolonisation comprend une mémoire 71, une unité de traitement 72 équipée par exemple d'un microprocesseur, et pilotée par le programme d'ordinateur 73, mettant en œuvre le procédé selon la divulgation. Dans au moins un mode de réalisation, l'invention est partiellement mise en œuvre sous la forme d'une application installée sur un dispositif de communication en possession d'une entité, tel qu'un utilisateur ou un technicien et/ou par l'intermédiaire d'un dispositif dédié uniquement à la réception des données acoustiques en provenance du capteur de biocolonisation. Un tel capteur de biocolonisation comprend par exemple tout ou partie des moyens suivants :
- Des moyens d'acquisition de données (température et tension électrique) ;
- Une mémoire de stockage, à minima une mémoire volatile ;
- Un Dispositif de commande de chauffage ;
- Un dispositif d'Émission et réception acoustique ;
- Des batteries ou accumulateurs pour l'électronique et le chauffage (autonomie de 3 à 4 ans, en fonction de l'utilisation) ;
- Des moyens d'exécution d'un code logiciel tel que présentés précédemment, ces moyens se présentent sous la forme d'une application logicielle spécifique, ou encore sous la forme de composants matériels dédiés construits en vue de la réalisation de ces fonctions, tel qu'un élément de sécurisation (SE) ou un environnement d'exécution sécurisé. L'élément de sécurisation peut se présenter sous la forme d'une carte Sim, USim, UICC, ou encore un composant de sécurité spécifique.

De manière complémentaire, en fonction des modes de réalisation, il peut être envisagé, en plus de relever les températures au niveau du capteur, d'effectuer une mesure de température de l'eau (qui n'est pas chauffée). Cette mesure de la température de l'eau ambiante est réalisée à l'aide d'un capteur sur la surface de la partie supérieure du capteur, le plus loin possible de la zone chauffée et là où la biocolonisation n'est pas possible. Ainsi, dans ce mode de réalisation, le capteur de température de l'eau est situé à proximité de l'émetteur acoustique du fait de la présence, à la surface, du traitement empêchant la biocolonisation.

## Revendications

1. Dispositif de mesure de température configuré pour être apposé sur un composant immergé pour évaluer la biocolonisation, ce dispositif comprenant
- un élément chauffant (EICh) piloté par un circuit de chauffe (CEIC) ; et
- au moins un module de captation de température (M1, M2), piloté par un module de mesure de température (CEMT), le module de captation étant destiné à capter la température à proximité de l'élément chauffant (ElCh), durant une période prédéterminée ; **caractérisé en ce que** le dispositif de mesure de température comprend en outre:
- au moins un module de mémorisation (M) des températures obtenues par le module de mesure de température (CEMT) ;
- un module de transmission (MTrans) des données mémorisées dans le module de mémorisation (M), et
en **en ce qu'**il comprend une partie (P1) comprenant d'une part des moyens d'alimentation du dispositif de mesure de température et d'autre part un module (PSup) comprenant notamment le circuit de chauffe (CEIC), le module de mesure de température (CEMT), le module de mémorisation (M), et le module de transmission (MTrans), cette partie P1 étant distincte d'une partie (P2) dite de chauffe et de mesure, au moins une portion de la partie P1 comprenant un traitement limitant la biocolonisation.

2. Dispositif de mesure de température selon la revendication 1, caractérisé en ce ladite partie (P2) dite de chauffe et de mesure, de forme globalement hémicylindrique, comprend une pluralité de couches comprenant :
- Une couche de support (C4), en contact avec la surface externe du composant immergé ;
- Une couche d'isolation (C3), permettant d'isoler la couche support ;
- Une couche de chauffe (C2), comprenant ledit au moins un élément chauffant (EICh) ;
- Une couche métallique (C1), dite d'accumulation pour accumuler la chaleur produite par la couche de chauffe.

3. Dispositif de mesure de température selon la revendication 2, **caractérisé en ce qu'**il comprend au moins deux modules de captation de température (M1, M2) et **en ce qu'**au moins un premier un module de captation de température (M1) est inséré au sein de la couche d'accumulation (C1) et **en ce qu'**au moins un deuxième un module de captation de température (M2) est inséré au sein de la couche d'isolation (C3).

4. Dispositif de mesure de température selon la revendication 1, **caractérisé en ce que** le module de transmission (MTrans) des données comprend un composant de transmission acoustique (HPi).

5. Système d'obtention de données représentative d'une biocolonisation d'un composant immergé en pleine mer, système **caractérisé en ce qu'**il comprend au moins un dispositif de mesure de température selon la revendication 1 et au moins un dispositif de traitement de données de réponse en température transmises par ledit au moins un dispositif de mesure de température, ledit dispositif de traitement étant apte à caractériser la biocolonisation du composant immergé en fonction des données de réponse en températures.

6. Procédé d'obtention de données représentative d'une biocolonisation d'un composant immergé, procédé mis en œuvre par un système selon la revendication 5, et **caractérisé en ce qu'**il comprend les étapes suivantes :
- une étape de chauffe (E001), pendant une période prédéterminée, dudit élément chauffant dudit au moins un dispositif de mesure de température ;
- une pluralités d'étapes de mesure (E002) de température résultant de l'étape de chauffe ;
- étape de stockage (E003) des données mesurées, notamment comprenant l'horodatage de ces données ; et ultérieurement,
- une étape de transmission (E004) des données stockées, suivi d'une étape de caractérisation (E005) de la biocolonisation à l'aide des données de température transmises.

7. Procédé d'obtention de données représentative d'une biocolonisation d'un composant immergé selon la revendication 6, **caractérisé en ce que** l'étape de caractérisation (E005) de la biocolonisation à l'aide des données de température transmises comprend le calcul d'un coefficient de transfert de chaleur h de la faune et de la flore sous-marine constituant la biocolonisation, à l'aide d'un modèle thermique analytique 1D ou d'un modèle thermique conductif résolu par la méthode des quadripôles.

8. Produit programme d'ordinateur comprenant des instructions de code de programme pour la mise en œuvre d'un procédé d'obtention de données représentative d'une biocolonisation selon la revendication 6, lorsqu'il est exécuté par un processeur.

## Patentansprüche

1. Temperaturmessvorrichtung, die zum Anbringen an einer getauchten Komponente konfiguriert ist, um die Biokolonisation zu bewerten, wobei diese Vorrichtung umfasst:
- ein Heizelement (EICh), das von einer Heizschaltung (CEIC) gesteuert wird; und
- mindestens ein Temperaturerfassungsmodul (M1, M2), das von einem Temperaturmessmodul (CEMT) gesteuert wird, wobei das Erfassungsmodul dazu bestimmt ist, die Temperatur in der Nähe des Heizelements (EICh) während eines vorbestimmten Zeitraums zu erfassen; **dadurch gekennzeichnet, dass** die Temperaturmessvorrichtung ferner umfasst:
- mindestens ein Modul (M) zum Speichern der Temperaturen, die vom Temperaturmessmodul (CEMT) erfasst werden;
- ein Modul (MTrans) zur Übertragung der im Speichermodul (M) gespeicherten Daten, und
dadurch, dass sie einen Teil (P1) umfasst, der einerseits Mittel zur Versorgung der Temperaturmessvorrichtung und andererseits ein Modul (PSup) umfasst, das insbesondere die Heizschaltung (CEIC), das Temperaturmessmodul (CEMT), das Speichermodul (M) und das Übertragungsmodul (MTrans) umfasst, wobei dieser Teil P1 von einem sogenannten Heiz- und Messteil (P2) getrennt ist und mindestens ein Abschnitt des Teils P1 eine die Biokolonisation begrenzende Behandlung umfasst.

2. Temperaturmessvorrichtung nach Anspruch 1, **dadurch gekennzeichnet, dass** der sogenannte Heiz- und Messbereich (P2) mit einer im Wesentlichen halbzylindrischen Form mehrere Schichten umfasst, darunter:
- eine Trägerschicht (C4), die mit der Außenfläche der getauchten Komponente in Kontakt steht;
- eine Isolierschicht (C3) zur Isolierung der Trägerschicht;
- eine Heizschicht (C2), die mindestens ein Heizelement (EICh) umfasst;
- eine Metallschicht (C1), genannt Akkumulationsschicht zur Akkumulation der von der Heizschicht erzeugten Wärme.

3. Temperaturmessvorrichtung nach Anspruch 2, **dadurch gekennzeichnet, dass** sie mindestens zwei Temperaturerfassungsmodule (M1, M2) umfasst und dass mindestens ein erstes Temperaturerfassungsmodul (M1) in die Akkumulationsschicht (C1) und mindestens ein zweites Temperaturerfassungsmodul (M2) in die Isolierschicht (C3) eingesetzt ist.

4. Temperaturmessvorrichtung nach Anspruch 1, **dadurch gekennzeichnet, dass** das Datenübertragungsmodul (MTrans) eine akustische Übertragungskomponente (HPi) umfasst.

5. System zum Erhalten von Daten, die für die Biokolonisation einer in offener See getauchten Komponente repräsentativ sind, wobei das System **dadurch gekennzeichnet ist, dass** es mindestens eine Temperaturmessvorrichtung nach Anspruch 1 und mindestens eine Vorrichtung zur Verarbeitung der von der mindestens einen Temperaturmessvorrichtung übertragenen Temperaturreaktionsdaten umfasst, wobei die Verarbeitungsvorrichtung in der Lage ist, die Biokolonisation der getauchten Komponente anhand der Temperaturreaktionsdaten zu charakterisieren.

6. Verfahren zum Erhalten von Daten, die für eine Biokolonisation einer getauchten Komponente repräsentativ sind, wobei das Verfahren durch ein System nach Anspruch 5 durchgeführt wird und **dadurch gekennzeichnet ist, dass** es die folgenden Schritte umfasst:
- einen Schritt zum Erhitzen (E001) des Heizelements der mindestens einen Temperaturmessvorrichtung während eines vorbestimmten Zeitraums;
- mehrere Schritte zum Messen (E002) der Temperatur, die sich aus dem Schritt zum Erhitzen ergibt;
- einen Schritt zum Abspeichern (E003) der gemessenen Daten, insbesondere einschließlich der Zeitstempelung dieser Daten; und anschließend
- einen Schritt zum Übertragen (E004) der abgespeicherten Daten, gefolgt von einem Schritt zum Charakterisieren (E005) der Biokolonisation anhand der übertragenen Temperaturdaten.

7. Verfahren zum Erhalten von Daten, die für eine Biokolonisation einer getauchten Komponente repräsentativ sind, nach Anspruch 6, **dadurch gekennzeichnet, dass** der Schritt zur Charakterisierung (E005) der Biokolonisation anhand der übertragenen Temperaturdaten die Berechnung eines Wärmeübertragungskoeffizienten h der die Biokolonisation bildenden Unterwasserfauna und -flora unter Verwendung eines analytischen 1D-Wärmemodells oder eines durch die Quadrupolmethode gelösten Wärmeleitungsmodells umfasst.

8. Computerprogrammprodukt, das Programmcodeanweisungen zur Durchführung eines Verfahrens zum Erhalten von Daten umfasst, die für eine Biokolonisation nach Anspruch 6 repräsentativ sind, wenn es von einem Prozessor ausgeführt wird.

## Claims

1. A temperature measuring device configured to be applied to an immersed component in order to evaluate biocolonisation, this device comprising:
- a heating element (EICh) controlled by a heating circuit (CEIC); and
- at least one temperature sensing module (M1, M2), controlled by a temperature measuring module (CEMT), the sensing module being intended to sense the temperature in the vicinity of the heating element (EICh), over a predetermined period; **characterised in that** the temperature measuring device comprises:
- at least one memory module (M) of the temperatures obtained by the temperature measuring module (CEMT);
- a data transmission module (MTrans) for transmitting the data stored in the memory module (M), and
**in that** it comprises a part (P1) comprising, on the one hand, power supply means for the temperature measuring device and, on the other hand, a module (PSup) comprising in particular the heating circuit (CEIC), the temperature measuring module (CEMT), the memory module (M) and the transmission module (MTrans), this part P1 being distinct from a so-called heating and measuring part (P2), at least one portion of the part P1 comprising a treatment to limit biocolonisation.

2. The temperature measuring device according to claim 1, **characterised in that** said so-called heating and measuring part (P2), of overall hemicylindrical shape, comprises a plurality of layers comprising:
- a supporting layer (C4), in contact with the outer surface of the immersed component;
- an insulating layer (C3), insulating the supporting layer;
- a heating layer (C2), comprising said at least one heating element (ElCh);
- a so-called accumulating metallic layer (C1), for accumulating the heat produced by the heating layer.

3. The temperature measuring device according to claim 2, **characterised in that** it comprises at least two temperature sensing modules (M1, M2) and **in that** at least a first temperature sensing module (M1) is inserted within the accumulating layer (C1) and **in that** at least a second temperature sensing module (M2) is inserted within the insulating layer (C3).

4. The temperature measuring device according to claim 1, **characterised in that** the data transmission module (MTrans) comprises an acoustic transmission component (HPi).

5. A system for obtaining data representative of a biocolonisation of a component immersed in the open sea, the system being **characterised in that** it comprises at least one temperature measuring device according to claim 1 and at least one device for processing temperature response data transmitted by said at least one temperature measuring device, said processing device being able to characterise the biocolonisation of the immersed component as a function of the temperature response data.

6. A method for obtaining data representative of a biocolonisation of an immersed component, the method being implemented by a system according to claim 5, and **characterised in that** it comprises the following steps:
- a step (E001) of heating, for a predetermined period, said heating element of said at least one temperature measuring device;
- a plurality of steps (E002) of measuring the temperature resulting from the heating step;
- a step (E003) of storing the measured data, in particular comprising the timestamping of these data; and subsequently,
- a step (E004) of transmitting the stored data, followed by a step (E005) of characterising the biocolonisation using the transmitted temperature data.

7. The method for obtaining data representative of a biocolonisation of an immersed component according to claim 6, **characterised in that** the step (E005) of characterising the biocolonisation using the transmitted temperature data comprises calculating a heat transfer coefficient h of the underwater fauna and flora constituting the biocolonisation, using a 1D analytical thermal model or a conductive thermal model solved by the quadrupole method.

8. A computer programme product comprising programme code instructions for implementing a method for obtaining data representative of a biocolonisation according to claim 6, when it is executed by a computer.
